# EUROPEAN PATENT APPLICATION

(11) **EP 2 720 433 A1**
(43) Date of publication of application: **16.04.2014**
(21) Application number: 12306255.6
(22) Date of filing: 12.10.2012
(51) Int. Cl.: H04L 29/08, H04L 12/24

(54) **System comprising an end-user device and a service provider network coupled via a broadband connection, and respective end-user device**

(71) Applicant: Thomson Licensing, 92130 Issy-les-Moulineaux (FR)
(72) Inventor: Van de Poel, Dirk, 2630 Aartselaar (BE); Dumet, Sylvain, Concord, NC North Carolina 28027 (US)
(74) Representative: Arnold, Klaus-Peter

(57) **Abstract**

The system comprises an end-user device (20) and a service provider network (30) coupled via a broadband connection (22) for providing Internet services, wherein the end-user device comprises a device execution environment (21) with a device software bus (25) for running software components on the end-user device. The service provider network includes a network located execution environment (33) for running a software component of the end-user device on the service provider network, and the device software bus is coupled via the broadband connection with the network execution environment for the operation of the end-user device.

## Description

### TECHNICAL FIELD

The invention relates to the field of end-user devices, in particular to remotely managed customer premises equipment devices operating via a broadband connection with a service provider network.

### BACKGROUND OF THE INVENTION

Residential gateways are widely used to connect devices in a home of a customer to the Internet or any other wide area network (WAN). Residential gateways use in particular digital subscriber line (DSL) technology that enables a high data rate transmission over copper lines, or optical fiber broadband transmission systems, for example fiber-to-the-home (FTTH) and fiber-to-the premises (FTTP).

Network service providers (NSP), e.g. Internet service providers (ISP), have to manage a large amount, up to millions, of residential gateways, and also other devices such as routers, switches, telephones and set-top boxes, which are understood in this context as customer premises equipment (CPE) devices. Remote management of CPE devices can be achieved by means of a central configuration server (CCS), which interacts with individual CPE devices to provide them with configuration settings and to extract diagnostics information by using a specific application layer protocol.

A widely used example of a CPE remote management is known as the CPE WAN management protocol (CWMP), which was developed by the Broadband Forum and defined by a technical report 069, also commonly referred to as TR-069. The CWMP defines an application layer protocol for remote management of CPE devices, by providing a communication protocol between the CPE devices and an auto configuration server (ACS) .

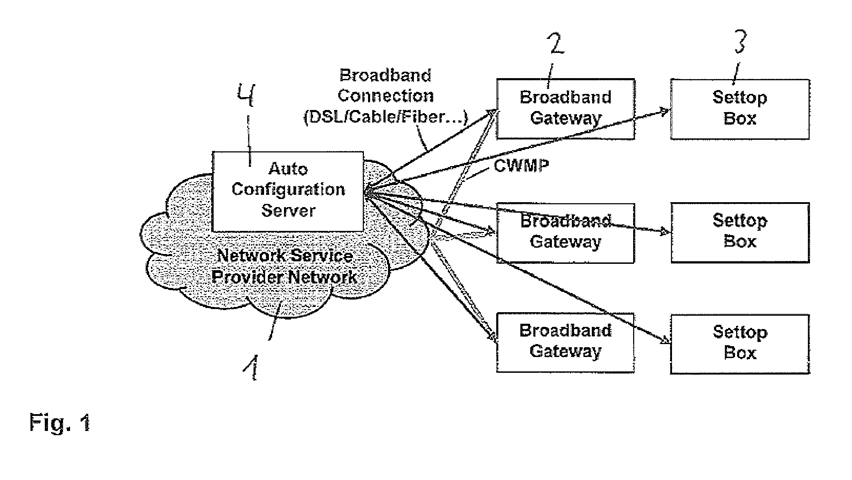

A wide area network of this kind providing xDSL services for CPE devices is schematically shown in Fig. 1: a network service provider (NSP) network 1 is arranged for providing e.g. Internet services to a multitude of residential gateways 2 and set-top boxes 3 via a broadband connection 5, DSL/Cable/Fiber, .... In addition, the NSP network 1 includes an ACS 4 for remotely managing the residential gateways 2 and set-top boxes 3. By using the TR-069 protocol, CWMP, the ACS 4 is for example capable of auto configuration and dynamic service provisioning, software/firmware image management, status and performance monitoring and diagnostics for the residential gateways 2 and set-top boxes 3.

Recent standardization activities led also to a number of standards on managing software components on a network connected end-user device such as a home network residential gateway. Examples of such standards are:
o The TR-069 Amendment 3, which uses Software Module Management via the TR-069 CPE WAN Management Protocol (http://www.broadband-forum.org/technical/download/TR-069_Amendment-3.pdf). TR-069 Amendment 3 enables the network service provider, who typically operates the ACS, to install, update and uninstall software modules on a CPE device such as a residential gateway or an IPTV set top box.
o UPnP-Device Management (http://upnp.org/specs/dm/UPnP-dm-SoftwareManagement-vl-Service.pdf), which is a Software Management Service that enables a UPnP control point in the home to install, update or uninstall a software component on a discovered manageable device in the home offering the Software Management service.
o Home Gateway Initiative on Software Execution Environments (http://www.homegatewayinitiative.org/ publis/RD-008-R3.pdf), which defines functional requirements on gateways supporting an execution environment, in particular an OSGI execution environment.

On the other hand, there are also research and other activities for moving and exploring broadband gateway functionality to the network, for example Eurescom (http://archive.eurescom.eu/-pub/deliverables/documents/P20 00-series/P2055/D2/P2055-D2.pdf), which explores possibilities to move broadband gateway functionality, e.g. OSI layer 3 and above, to the network.

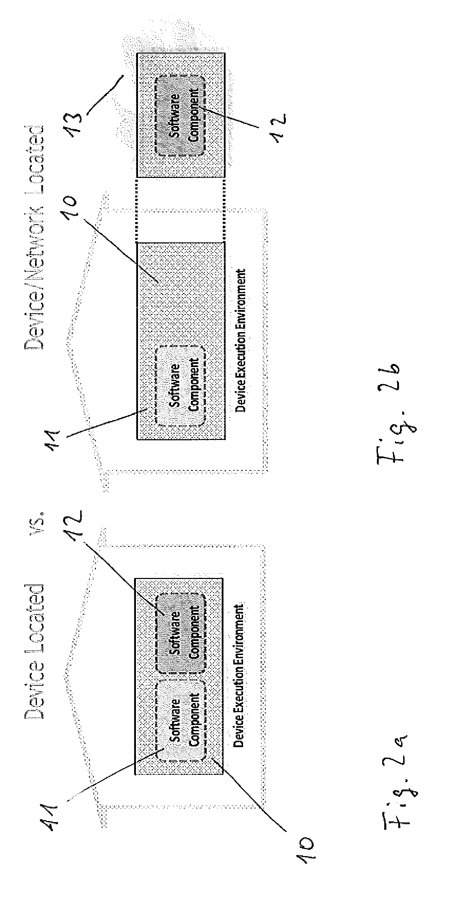

In addition, standardization, research and other activities exist exploring how to combine functionality located in the network or cloud with CPE device embedded functionality and how to find the optimal location distribution. Fig. 2a shows schematically a residential gateway 10 arranged within a home of an end-user. The residential gateway 10 includes a device execution environment, which comprises a multitude of software components, e.g. software components 11 and 12. It may be advantageous, to operates some software components, e.g. software component 12, somewhere in the cloud 13, for example within the NSP Network or within any other Internet service provider network, and keep the essential software components, e.g. software component 11, within the residential gateway 10, as shown in Fig. 2b.

With CPE device network supported dynamic software lifecycle management for device supported execution environments, a NSP can install software components on the CPE devices. When wanting to run any residential gateway software in the network or in the cloud, e.g. infrastructure as a service, or platform as a service, it is quite a challenge to integrate this network located software with the gateway embedded software and to integrate deployment of this software with already existing infrastructure for deploying software components on the residential gateway, such as a TR-069 ACS. In addition, because the gateway functionality is now divided over the gateway itself and network elements, for remote management, e.g. through TR-069, there are now multiple entities that need to be managed, rather than one, which adds complexity rather than reduces it.

State of the art research, e.g. ref. Eurescom, explores mechanisms in which all gateway layer 3 functionality, in particular IP protocol forwarding and related functionality, are moving to the network and possibly reside in access network edge routers. Such an approach is very challenging in terms of the huge increase in home network traffic that will enter the access network and there are also other aspects such as privacy, because every communication in the home may enter the access network, that make this task far from obvious: The increase of traffic entering the network will require more powerful network equipment. Furthermore, there is a trend towards hardware handling of layer 3 functionality of a gateway, because of the ever increasing speed of network technologies, which puts a challenge to the concept of moving this to network edge routers.

US 8,024,556 discloses systems, an apparatus, and methods for layered execution pre-boot configuration, the systems including a local computer, a base operating system, a layered execution environment, and a layered environment manager. A system may further include an environment update service and one or more layered environment data store to perform operations such as disabling a program, replacing a program, and changing a configuration file.

### SUMMARY OF THE INVENTION

The system comprises an end-user device and a service provider network coupled via a broadband connection for providing Internet services, wherein the end-user device comprises a device execution environment with a device software bus for running software components on the end-user device. The service provider network includes a network execution environment for running a software component of the end-user device on the service provider network, and the device software bus is coupled via the broadband connection with the network execution environment for the operation of the end-user device.

In a preferred embodiment, the network execution environment includes a network software bus, and the device software bus is coupled via the broadband connection with the network software bus of the network execution environment. The device execution environment, e.g. the device software bus, is coupled advantageously with the network execution environment via a HTML5 web socket protocol for providing bi-directional communication. The network execution environment utilizes in particular a network protocol, e.g. an Inter Process Communication protocol, for communicating with the device software bus via the broadband connection.

In another aspect of the invention, the device software bus and the network execution environment are connected via a reliable TCP connection, and the connection between the device software bus and the network execution environment remains established, until the end-user device reboots or powers off.

In further aspect of the invention, the end-user device comprises a management agent for operating with a management server of the service provider network, for example a CWMP client, to utilize a CPE WAN management protocol for a remote management of the end-user device, for example to perform software component lifecycle management operations. The service provider network is advantageously a network service provider network operating the broadband connection, but may be also any other Internet service provider network.

An end-user device for the system comprises in a preferred embodiment a device execution environment with a device software bus and software components, a lifecycle management (LCM) framework, a software execution environment and a management agent, all being coupled with the device software bus. The end-user device is for example a residential gateway, a set-top box or a smart phone, or any other service provider managed device.

### BRIEF DESCRIPTION OF THE DRAWINGS

Preferred embodiments of the invention are explained in more detail below by way of example with reference to schematic drawings, which show:
- Fig. 1: a wide area network according to prior art, including CPE devices and a network service provider network for providing broadband Internet services,
- Fig. 2: possibilities to arrange software components in a residential gateway or in a network or cloud,

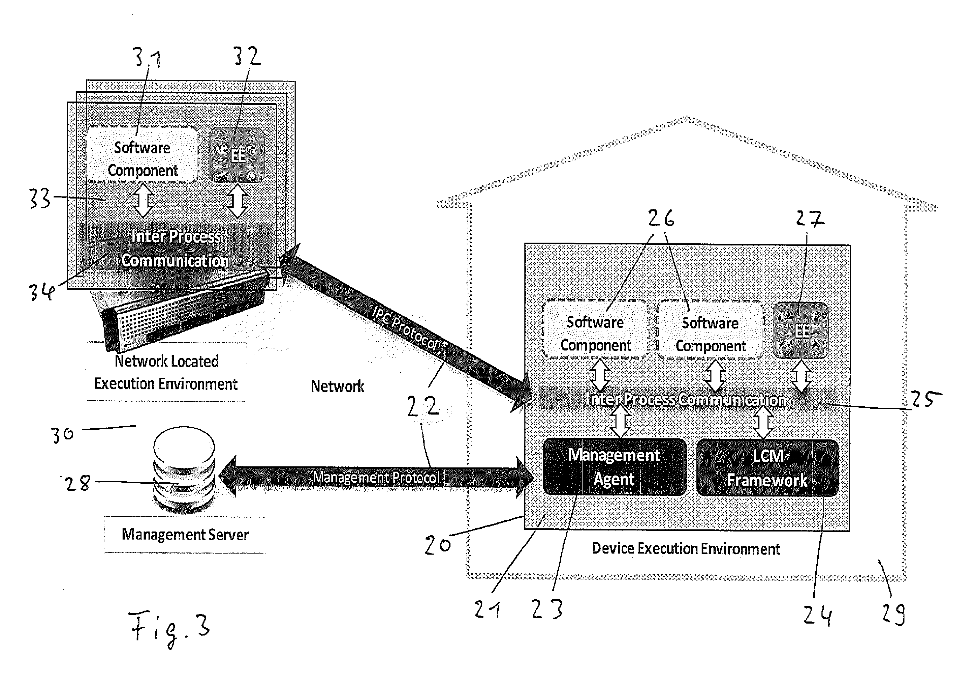

- Fig. 3: a system comprising an end-user device and a service provider network coupled via a broadband connection according to the invention, and
- Fig. 4: a flow diagram depicting a life-cycle management operation for a system in accordance with Fig. 3.

### DETAILED DESCRIPTION OF PREFERRED EMBODIMENTS

In the following description, a system comprising an end-user device and a service provider network being coupled via a broadband connection, e.g. xDSL, Cable (DOCSIS), optical fiber, etc., for providing Internet services to the end-user device is described. For purposes of explanation, numerous specific details are set forth in order to provide a thorough understanding of preferred embodiments. It will be evident, however, to one skilled in the art that the present invention may be practiced without these specific details.

The invention describes a mechanism which adds flexibility to move certain service provider managed end-user device functionality to the network, e.g. to the service provider of the broadband connection or to an Internet service provider, while seamlessly integrating with the end-user device. The mechanism allows in particular network or public cloud located execution environments, such as OSGi or a Linux environment, to communicate with the end-user device and announce itself as a device execution environment as if it is local on the device.

To existing device operation and management interfaces or channels, e.g. TR-069, UPnP, ..., there is no change or impact and all life-cycle management operations can take place in an identical manner as for a device embedded execution environment. The advantage of this approach with regard to the current state of the art is enabling flexibility to running device functionality in the network or public cloud without adding any additional complexity to existing life-cycle management operations: installing, updating and uninstalling applications and/or software components. In addition, the end-user devices can be cost-optimized to not contain complex execution environment technologies such as OSGi, while still be able to add and run execution environments in the network as needed.

The end-user device is in a preferred embodiment a Customer Premises Equipment (CPE) device, for example a residential gateway, a router, a switch, a set-top box, a tablet PC, a TV or a smart phone, and includes a microprocessor, a nonvolatile memory, in which an operating system and applications are stored, and a volatile memory for the operation of the end-user device. The operating system of the CPE device is for example a LINUX operating system, on which one or more software execution environments are operating. A software execution environment supports dynamic installation, uninstallation, updating, starting and stopping of software components. Examples include but are not limited to Linux with software component management, e.g. multiple Linux execution environments can exist on the same device through virtualization or other techniques, or an Open Services Gateway initiative (OSGi) framework running on top of a Java Virtual Machine (JVM) which runs on the Linux operating system. The device main execution environment is of modular design and as example for a gateway includes software components for providing for example a DSL modem function, gateway and switching functions, FXS functions, VoIP functionality, Wi-Fi operation, a FTP function for file transfer and a DLNA media server function.

The system according to the invention includes an end-user device 20 and a service provider network 30 coupled via a broadband connection 22 for providing Internet services. In a preferred embodiment, the end-user device 20 comprises a management agent 23 for operating with a management server 28 of the service provider network 30 and comprises a device execution environment 21 including a device software bus 25, e.g. an Inter-process communication bus, for running software components 26 on the end-user device 20. The end-user device 20 is for example a residential gateway arranged within a local area network of a home 29 of a user.

A software bus is a programming interface that allows the software components to transfer data to each other. The software bus uses application programming interfaces like pipes, CORBA, D-BUS and OMG DDS, and embodiments are described for example in the reference:
http://en.wikipedia.org/wiki/ Inter-process_communication (IPC). The device software bus 25 allows the software components 26 to dynamically discover each other's presence and services, and interfaces and enables communication in between the software components via Application Programming Interfaces API), without necessarily needing to be aware of each other's location, depending on the IPC mechanism used.
The device software bus is therefore a technology to allow inter process communication between device embedded software components.

The device software bus 25 is extended outside of the end-user device according to the invention, so that software components that don't reside on the device can communicate with software components that do. Extending the software bus outside of the end-user device can be over various transport protocols and technologies, the invention does not rely on a single or particular technology. In a preferred embodiment, the end-user device 20 has a HTML5 web socket server allowing the software components and other clients to connect and to exchange data bidirectionally via the device software bus 25. A web socket is a web protocol technology providing a bi-directional, full-duplex communications channel over a single TCP connection and is defined in an IETF standard RFC 6455.

The service provider network 30 includes a network execution environment operating on a server hardware of the network 30 for running a software component of the end-user. The service provider network 30 can be for example an NSP network, an Internet service provider or any other computer network providing network communication, typically by using the Internet Protocol (IP). It can be a Network Service Provider broadband access network or any other network on the Internet. The service provider network 30 includes in a preferred embodiment a network located execution environment 33 with a network software bus 34, one or several software components 31 and an execution environment 32 for installing, updating and uninstalling of software components in the device execution environment.

The execution environment for the operation of the end-user device 20 is therefore a software execution environment, which includes a device execution environment 21 residing in the end-user device 20 and a network located execution environment 33 residing in the service provider network 30. The execution environment includes software components 26 coupled with the device software bus 25 within the end-user device 20 and software components 31 coupled with the network software bus 34 within the service provider network 30, which software components 26 and 31 provide the functionality of the end-user device 20, when started. The network located execution environment 33 operates in a preferred embodiment similar to the device execution environment 21 by announcing itself as execution environment and handling lifecycle management operations for the end-user device 20. The execution environment for the operation of the end-user device 20 supports software component lifecycle management (LCM) operations through mechanisms defined in standards. Example standards include but are not limited to TR-069 Amendment 3 and UPnP-DM. The software components can be understood in the context of the invention therefore as applications running in the end-user device or in the cloud, for example running in any service provider network, and provide end-user device functionality when started.

The end-user device 20 includes in a preferred embodiment an LCM execution environment 27 coupled with the device software bus 25 that handles the technological details of installing, updating or uninstalling a software component for a particular technology, e.g. one of the software components 26. A http URL pointing to the software component to be installed or used for updating in the end-user device 20 is transferred through the device software bus 25 to the LCM execution environment 27. The LCM execution environment 27 announces itself to a lifecycle management (LCM) framework 24 via the device software bus 25 to advertise its presence and characteristics. The LCM execution environment 27 receives the LCM operations from the LCM framework 24 and handles them after which the results are reported back to the LCM framework 24. The network located execution environment 33 includes also an LCM execution environment 32, operating in exactly the same manner as the device LCM execution environment 27, but residing somewhere in the network on a physical server infrastructure.

The management server 28 is for example an ACS server operating with the management agent 23 of the end-user device 20 by using the TR-069 protocol. Via the management server 28, an operator of the service provider network 30 can deploy and manage the end-user device 20 to perform the software component lifecycle management. The management agent 23 interfaces with the LCM framework 24 via the device software bus 25 to forward the commands from the management server 28, as received via the broadband connection 22.

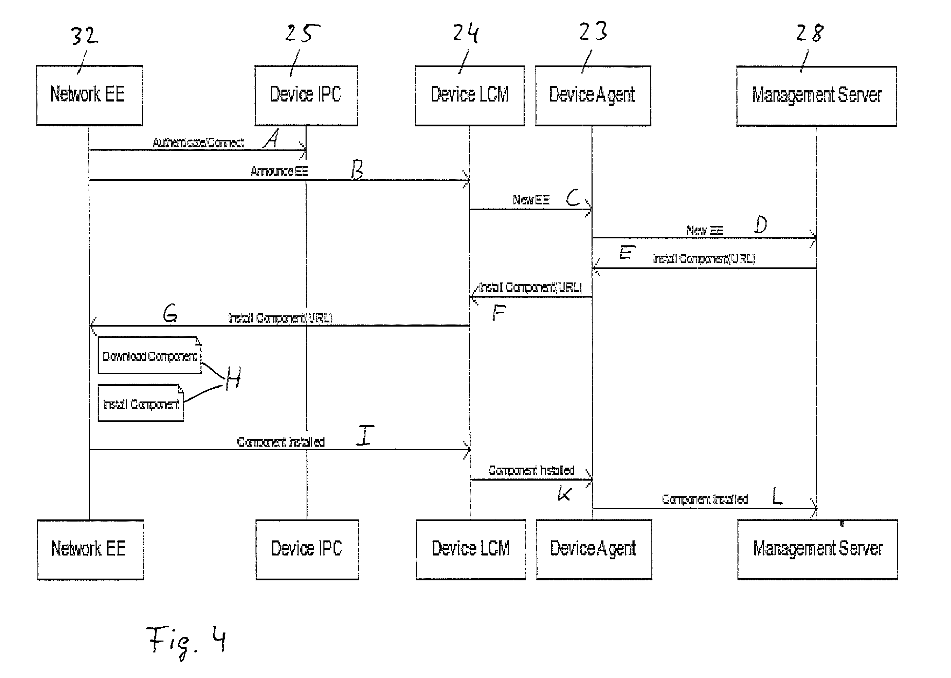

The operation of a preferred embodiment of the system is described now with regard to Fig. 4: An administrator of the service provider network 30 decides to instantiate network located execution environments for particular CPE devices. There will be one or more execution environments per CPE device and no shared ones amongst CPE devices. This can be done via multiple mechanisms, e.g. a direct interface to the network located server infrastructure with the possibility to create a new execution environment instance providing the CPE device identity of which device the execution environment will belong to.

Once a network located execution environment is running in the service provider network, i.e. LCM execution environment 32, it will determine the location of the CPE device it needs to integrate with, e.g. CPE device 20. Knowing the CPE device identity, e.g. serial number or any other unique property, the LCM execution environment 32 can query an ACS or any database of the service provider network 30, e.g. the management server 28, to learn the location of the CPE device 20, which is in practice the IP address. Linking a network located execution environment with a particular device can be done in multiple ways, for example through an administrator providing the unique device identity to each instantiated network execution environment.

The LCM execution environment 32 will contact the CPE device 30 it is "belonging" to and will communicate with the network execution environment 21 to connect and to unify the network software bus 34 and the device software bus 25, step A. The LCM execution environment 32 includes for example a HTML5 web socket client which connects to a web socket server on the CPE device 20 to establish a full duplex bidirectional communication path, over which inter-process communication data can be exchanged. The connection will remain established, e.g. by using a reliable TCP connection, until the CPE device 20 reboots or powers off. Once the CPE device 20 is available again, which is known by the management server or other systems, the connection is re-established.

Once the network software bus 34 is integrated with the device software bus 25, the LCM execution environment 32 will announce itself as an execution environment to the device LCM framework 24, step B. It announces its presence and its characteristics/properties, e.g. with reference to a TR-181i2 Software Modules data model:
i. Current status
ii. Technology / type (Linux, OSGi...)
iii. Vendor, version...
iv. Memory used and still available
v. List of installed software components and their status, etc

For the device LCM framework 24, the LCM execution environment 32 is an execution environment similar to the LCM execution environment 27 on the CPE device 20. Also, the LCM execution environment 32 will be visible and advertised to the management server 28 as if it is a CPE device embedded execution environment, steps C, D. As an example, the CPE device 20 is a broadband residential gateway running Linux as the device execution environment 21 and it may not have the CPU and memory resources to run an OSGi execution environment or another execution environment being extended with a network located OSGi execution environment.

In a further step E, the administrator operates the management server 28 so that it initiates a software component life-cycle operation and communicates this to the device management agent 23 of the CPE device 20, and also communicates this to the device management agents of all other CPE devices that need to perform the software component LCM operation. For an example: the management server 28 instructs all CPE devices with a device-embedded OSGI execution environment as well as all CPE devices with a network located OSGI execution environment to install the very same OSGi bundle. The life-cycle operation typically has an URL, e.g. a HTTP or HTTPS URL, which points to the location where the software component resides as well as to the operation to perform, and possibly to which device and network located execution environments to install it on, in case the CPE device 20 has more than one execution environment.

In a subsequent steps F, G, each device management agent 23 of the CPE devices will propagate the LCM operation to the targeted execution environment: In case the targeted execution environment is in fact the network execution environment 32, the LCM framework 24 will propagate the LCM operation to the network located execution environment 32. The network located execution environment 32 executes then the requested LCM operation: For an install operation for example, it will download the software component or software components, e.g. by acting as a HTTP client issuing a HTTP GET command to the LCM operation contained URL, and will perform what is needed to install the software component or software components on the execution environment, step H.

The network located device EE 32 reports back to the device LCM framework 24 the outcome of the LCM operation, step I: The device LCM framework 24 in its turn will reflect the outcome and the current, new state to the management agent 23, step K, which informs the management server 28 about the successful installation of the software component(s), step L. Therefore, any software component 31, 32 being installed in the network located execution environment 33 can communicate through the IPC framework integration seamlessly with the device embedded software components 23, 24, 26, 27, as if they would reside on the same CPE device.

The invention allows therefore extending home device capabilities and resources (CPU/memory) by adding an execution environment in the network to be able to offer new services. This allows creating of cost-effective devices embedding minimal functionality while being able to extend the functionality. One example is to offer "device software as a service", hence at charge, to customers that request it. So instead of embedding all functionality in the CPE device, requested functionality can be added by locating it in the network and integrating it with the CPE device.

It offers in particular full flexibility on deciding whether given functionality is located in the device itself or in the network/cloud. Device-functionality provided by the software component(s) can be relocated and moved. For example, the same execution environment is provided in the network and on the CPE device so that a single software component can be installed or moved to either the CPE device or to the network without needing to alter the software component.

Different from the current state of the art, the invention does not add any complexity to the present overall operational management for installing, updating, and uninstalling components, and is seamless to all current device capabilities and interfaces, for example to the TR-069 device management protocol. Furthermore, the network located execution environment can reside in the operator network or in public Internet datacenters, on so-called Infrastructure as a Service, using commonly available "cloud" technology without needing to change or replace service provider network edge routers or other equipment.

Also other embodiments of the invention may be utilized by one skilled in the art without departing from the scope of the present invention. The invention is in particular not limited to xDSL broadband connections and is applicable also to any other wired or wireless broadband technology, for example TV distribution cable, optical transmission, Broadband Over Powerline, WiMax or 3G wireless connectivity. The system as described may include advantageously also all kinds of end-user devices, e.g. residential gateways, routers, switches, Internet telephones and set-top boxes, including also smart phones, tablet PCs and other remotely controlled end-user devices. The invention resides therefore in the claims herein after appended.

## Claims

1. System comprising an end-user device (20) and a service provider network (30) coupled via a broadband connection (22) for providing Internet services, the end-user device (20) comprising a device execution environment (21) with a device software bus (25) for running software components (26) on the end-user device (20),
**characterized in that**
the service provider network (30) includes a network located execution environment (33) for running a software component (31) of the end-user device (20) on the service provider network (30), and
the device software bus (25) is coupled via the broadband connection (22) with the network located execution environment (33) for the operation of the end-user device (20).

2. System according to claim 1, wherein the network located execution environment (33) includes a network software bus (34), and the device software bus (25) is coupled via the broadband connection (22) with the network software bus (34) of the network located execution environment (33).

3. System according to claim 1 or 2, wherein the network located execution environment (33) utilizes a network protocol for communicating with the device software bus (25) via the broadband connection (22).

4. System according to claim 3, wherein the network protocol uses Inter Process Communication for connecting the device software bus (25) with the service provider network (30).

5. System according to according to one of the preceding claims, wherein the device execution environment (21) is coupled with the network located execution environment (33) via a HTML5 web socket protocol for providing bi-directional communication.

6. System according to according to one of the preceding claims, wherein the end-user device (20) comprises a management agent (23) for operating with a management server (28) of the service provider network (30).

7. System according to claim 6, wherein the management agent (23) is a CWMP client and the management server (28) is an auto configuration server.

8. System according to according to one of the preceding claims, wherein the service provider network (30) is a network service provider network operating the broadband connection (22).

9. System according to according to one of the preceding claims, wherein the connection between the device software bus (25) and the network located execution environment (33) remains established, until the end user device (20) reboots or powers off.

10. System according to according to one of the preceding claims, wherein the device software bus (25) and the network located execution environment (33) are coupled via a TCP connection.

11. End-user device for a system according to one of the preceding claims.

12. The end-user device of claim 11, comprising a device execution environment (21) with a device software bus (25) and with software components (26), a lifecycle management (LCM) framework (24), an LCM execution environment (27) and a management agent (23), all being coupled with the device software bus (25).

13. The end-user device of claim 11 or 12, wherein the end-user device device (20) is a residential gateway, a set-top box or a smart phone.
